(19) Europäisches Patentamt / European Patent Office / Office européen des brevets

(11) **EP 4 742 731 A1**

(12) **EUROPEAN PATENT APPLICATION**
published in accordance with Art. 153(4) EPC

(43) Date of publication:
**13.05.2026 Bulletin 2026/20**

(51) International Patent Classification (IPC):
*H04W 24/02* (2009.01)

(21) Application number: 23944580.2

(52) Cooperative Patent Classification (CPC):
**H04W 24/08; H04W 24/02; H04W 24/10;**
**H04W 84/06**

(22) Date of filing: 07.07.2023

(86) International application number:
**PCT/CN2023/106425**

(87) International publication number:
**WO 2025/010557 (16.01.2025 Gazette 2025/03)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **GUANGDONG OPPO MOBILE**
**TELECOMMUNICATIONS**
**CORP., LTD.**
**Dongguan, Guangdong 523860 (CN)**

(72) Inventors:
• **HU, Rongyi**
  **Dongguan, Guangdong 523860 (CN)**
• **ZHANG, Jinyu**
  **Dongguan, Guangdong 523860 (CN)**

(74) Representative: **Novagraaf Technologies**
**2 rue Sarah Bernhardt**
**CS90017**
**92665 Asnières-sur-Seine Cedex (FR)**

(54) **CELL MEASUREMENT METHOD AND APPARATUS, DEVICE, AND STORAGE MEDIUM**

(57) Provided is a method and apparatus for cell measurement, relating to the technical field of wireless communications. The method is performed by a terminal and includes: performing (401) cell measurement for at least two satellite cells with a same synchronization signal/physical broadcast channel, PBCH, block, SSB, measurement time configuration, SMTC, based on measurement priorities of the at least two satellite cells.

401

> Performing cell measurement for at least two satellite cells associated with a same synchronization signal/physical broadcast channel (PBCH) block (SSB) measurement time configuration (SMTC) based on measurement priorities of the at least two satellite cells.

FIG. 4

EP 4 742 731 A1

## Description

### TECHNICAL FIELD

Embodiments of the present disclosure relate to the technical field of communications, and in particular, relate to a method and apparatus for cell measurement, and a device and a storage medium therefor.

### RELATED ART

In a mobile communication system, a terminal needs to measure signal strength and signal quality of a current cell and neighboring cells in order to perform handover or increase carrier components in a timely manner.

Synchronization signal/physical broadcast channel (PBCH) block (SSB) measurement timing configuration (SMTC) is a set of configuration information for measurement time windows for an SSB measurement, and the terminal may perform cell measurement based on the SMTC.

### SUMMARY

Embodiments of the present disclosure provide a method and apparatus for cell measurement, and a device and storage medium therefor. The technical solutions are as follows:

According to one aspect of the embodiments of the present disclosure, a method for cell measurement is provided. The method is performed by a terminal, and includes:

performing cell measurement for at least two satellite cells associated with a same SMTC based on measurement priorities of the at least two satellite cells.

According to another aspect of the embodiments of the present disclosure, an apparatus for cell measurement is provided. The apparatus includes:

a measuring module, configured to perform cell measurement for at least two satellite cells associated with a same SMTC based on measurement priorities of the at least two satellite cells.

According to another aspect of the embodiments of the present disclosure, a computer device is provided. The computer device includes a processor, a memory, and a transceiver. The memory stores one or more computer programs, wherein the processor, when loading and running the one or more computer programs, is caused to perform the method for cell measurement as described above.

According to another aspect of the embodiments of the present disclosure, a computer-readable storage medium is provided. The computer-readable storage medium stores one or more computer programs, wherein the one or more computer programs, when loaded and run by a processor, cause the processor to perform the method for cell measurement as described above.

According to another aspect of the embodiments of the present disclosure, a computer program product or computer program including one or more computer instructions is provided. The one or more computer instructions are stored in the computer-readable storage medium, and when called and executed by a processor, cause the processor to perform the method for cell measurement as described above.

The technical solutions according to the embodiments of the present disclosure may achieve the following beneficial effects:

In the NTN network, the terminal may measure a plurality of satellite cells associated with the same SMTC based on the measurement priorities of the plurality of satellite cells, such that the satellite cells with high priorities are measured first, thereby achieving effective cell measurement.

### BRIEF DESCRIPTION OF DRAWINGS

For clearer descriptions of the technical solutions according to the embodiments of the present disclosure, the following briefly illustrates drawings required for the description of the embodiments. Obviously, the illustrated drawings below are only some embodiments of the present disclosure. For ordinary persons skilled in the art, other drawings may be obtained based on these drawings without the premise of creative labor.

FIG. 1 is a schematic diagram of a network architecture according to some embodiments of the present disclosure;
FIG. 2 is a schematic network diagram of an NTN system according to some embodiments of the present disclosure;
FIG. 3 is a schematic diagram of an SMTC window offset involved in the present disclosure;
FIG. 4 is a schematic flowchart of a method for cell measurement according to some embodiments of the present disclosure;
FIG. 5 is a schematic flowchart of a method for cell measurement according to some embodiments of the present disclosure;

FIG. 6 is a schematic flowchart of a method for cell measurement according to some embodiments of the present disclosure;

FIG. 7 is a schematic flowchart of a method for cell measurement according some embodiments of the present disclosure;

FIG. 8 is a schematic flowchart of a method for cell measurement according some embodiments of the present disclosure;

FIG. 9 is a block diagram of an apparatus for cell measurement according to some embodiments of the present disclosure; and

FIG. 10 is a schematic structural diagram of a computer device according to some embodiments of the present disclosure.

## DETAILED DESCRIPTION

For clearer descriptions of the objectives, technical solutions, and advantages of the present disclosure, the embodiments of the present disclosure are described in detail hereinafter in conjunction with the accompanying drawings.

The network architecture and service scenarios described in the embodiments of the present disclosure are intended to illustrate the technical solutions according to the embodiments of the present disclosure more clearly but do not limit the technical solutions. Those skilled in the art understand that with the evolution of the network architecture and emergence of new service scenarios, the technical solutions according to the embodiments of the present disclosure are also applicable to addressing similar technical problems.

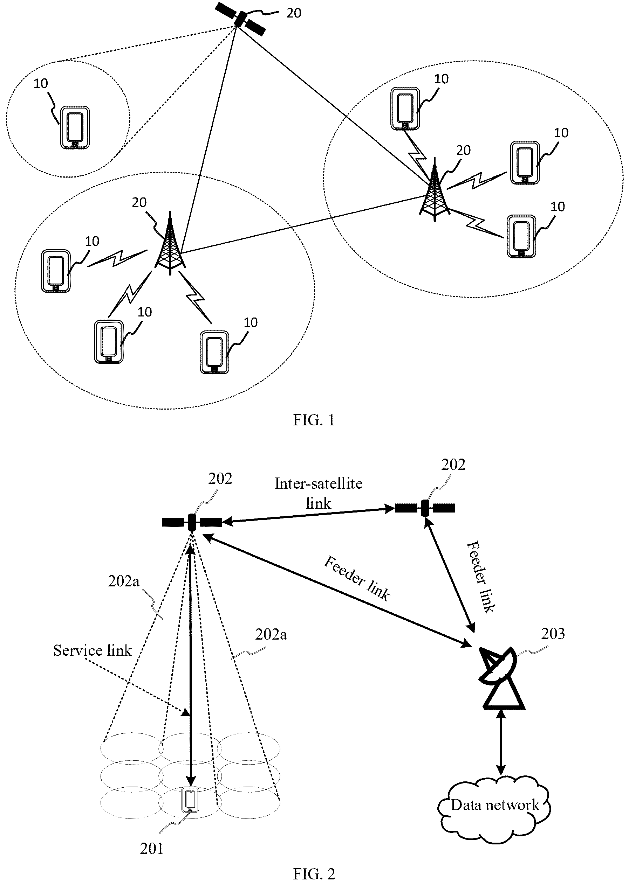

FIG. 1 is a schematic diagram of a network architecture of a communication system according to some embodiments of the present disclosure. The network architecture may involve a terminal 10 and a base station 20.

In general, a plurality of terminals 10 are provided, and one or more terminals 10 may be deployed in a cell managed by each base station 20. The terminal 10 may include various handheld devices with wireless communication functions, vehicle-mounted devices, wearable devices, computer devices or other processing devices connected to a wireless modem, and various forms of user equipment (UEs), mobile stations (MSs), terminal devices, and the like. For ease of description herein, the devices are collectively referred to as the terminal.

The base station 20 is an apparatus deployed in an access network to provide the terminal with a wireless communication function. The base station 20 may include various forms of satellite stations, macro base stations, micro base stations, relay stations, access points, and the like. In a system using different wireless technologies, the names of devices with base station functions may vary. For instance, in a 5G (5th generation mobile communication technology) new radio (NR) system, the devices are known as gNodeBs or gNBs. With evolution of the communication technology, the name "base station" may change. For ease of description herein, the devices that provide the wireless communication function for the terminal 20 are collectively referred to as the base station.

In some embodiments, FIG. 1 does not illustrate that the network architecture may include other network devices such as a central network control (CNC) entity, an access and mobility management function (AMF) entity, a session management function (SMF) entity, or a user plane function (UPF) entity, and the like.

The "5G NR" system in the embodiments of the present disclosure may also be referred to as a 5G or NR system, but those skilled in the art may understand their meanings. The technical solutions according to the embodiments of the present disclosure may be applicable to the 5G NR system, or to a future evolved system of the 5G NR system, or to a system prior to the 5G NR system, such as a long-term evolution (LTE) system.

Concepts or terms involved in the present disclosure are described herein prior to introduction of the technical solutions described in the embodiments of the present disclosure.

1) 5G NR system

The 5G NR system is a new generation of wireless communication system proposed based on user requirements on wireless communication rate, latency, high-speed mobility, energy efficiency, and diversity and complexity of wireless communication services in the future. The main application scenarios of the 5G systems include: enhanced mobile broadband (eMBB), ultra-reliable and low latency communications (URLLC), and massive machine-type communications (mMTC).

In the 5G network environment, to reduce air interface signaling and quickly restore wireless connection and data services, a new radio resource control (RRC) state is defined, i.e., an RRC inactive state (RRC_INACTIVE). This state is different from an RRC idle state (RRC_IDLE) and an RRC connected state (RRC_CONNECTED, or RRC_ACTIVE). The three RRC states are described as follows.

RRC_IDLE: mobility is based on a cell selection and reselection of a UE. Paging is initiated by a core network (CN), and a paging area is configured by the CN. No UE access stratum (AS) context is present, and no RRC connection is present between the UE and the base station.

RRC_CONNECTED: An RRC connection is present between the UE and a base station, and a UE AS context is present between the UE and the base station. The network acknowledges that a location of the UE is defined at a level granularity. Mobility is controlled by the network. Unicast data may be transmitted between the UE and the base station.

RRC _INACTIVE: mobility is based on cell selection and cell reselection, a connection is present between a CN and an NR, and a UE AS context is present on a base station. Paging is initiated by a radio access network (RAN), and a paging area based on the RAN is managed by the RAN, and the network acknowledges that the location of the UE is at a RAN paging area granularity.

2) Non-terrestrial network (NTN)

At present, relevant standard organizations are studying the NTN technology. The NTN generally provides communication services to ground users based on satellite communication, and may have unique advantages compared to ground cellular network communication. First, satellite communication is not limited by a geographic location of a user. For example, common land communication fails to cover areas such as oceans, mountains, deserts, and the like. where communication devices may not be deployed or where communication coverage is not provided due to sparse population. For satellite communication, since one satellite may cover a large area of land, and the satellite may orbit the Earth, in theory every corner of the Earth may be covered by satellite communication. Secondly, satellite communication has great social value. Satellite communication may cover mountainous areas, poor and undeveloped countries or regions at low costs, such that people in these areas may enjoy advanced voice communication and mobile internet services, which is conducive to narrowing the digital divide from developed areas and promoting the development of these areas. Thirdly, satellite communication features long ranges, and the cost of communication does not increase significantly as the communication range increases; and finally, satellite communication has high stability and is not restricted by natural disasters.

According to the different orbital altitudes, communication satellites are divided into low-Earth orbit (LEO) satellites, medium-Earth orbit (MEO) satellites, geostationary Earth orbit (GEO) satellites, high elliptical orbit (HEO) satellites, and the like. The NTN mainly studied at the current stage is the communication technology based on LEO satellites and GEO satellites.

LEO satellites: The altitude of low-orbit satellite ranges from 500 km to 1500 km, and a corresponding orbital period is about 1.5 hours to 2 hours. A signal propagation delay of single-hop communication between users is generally less than 20 ms. A maximum satellite visibility time is 20 minutes. The signal propagation distance is short, the link loss is small, and the transmit power required for user terminals is not high.

GEO satellites: The orbital altitude of a geosynchronous orbit satellite is 35786 km and a revolution period around the Earth is 24 hours. A signal propagation delay of messages is generally 250 ms.

To ensure satellite coverage and improve a system capacity of the entire satellite communication system, the satellites use a plurality of beams to cover a ground surface. A single satellite may form dozens or even hundreds of beams to cover the ground and may cover a diameter of tens to hundreds of kilometers.

Satellite beam: A satellite beam is a smallest unit of satellite coverage of the surface of the Earth, corresponding to different directions. Usually, a single satellite covers the surface of the Earth with hundreds or thousands of satellite beams. These satellite beams may be deployed as different cells or the same cell. Considering possible co-channel interference between adjacent satellite beams, a frequency reuse factor greater than 1 is generally considered, i.e., adjacent satellite beams are distinguished by different frequencies/carriers/bands.

At present, in the R17 NTN standardization, two NTN scenarios are mainly studied: transparent payload NTN and regenerative payload NTN. The NTN network commonly contains the following network elements:

1. One or more gateways: used to connect satellites and terrestrial public networks.
2. Feeder links: used for communication between the gateway and the satellite.
3. Service links: used for communication between the terminal and the satellite.
4. Satellites: categorized into satellites based on transparent payload and satellites based on regenerative payload in terms of functionality.

Transparent payload: The satellite only provides the functions for wireless frequency filtering, frequency conversion, and amplification. That is, the satellite only provides transparent forwarding of a signal, without altering a waveform of the signal it forwards.

Regenerative payload: Other than providing the functions for wireless frequency filtering, frequency conversion, and amplification, the satellite may additionally provide the functions for demodulation/decoding, routing/conversion, and encoding/modulation. That is, the satellite possesses part or all functions of a base station.

5. Inter-satellite link: used for communication between satellites in a regenerative payload scenario.

FIG. 2 is a structural diagram of a network architecture of an NTN system according to some embodiments of the present disclosure. As illustrated in FIG. 2, the NTN system includes a terminal 201, satellites 202, and a gateway device 203. The satellites 202 are connected to the gateway device 203 via wireless connections (feeder links), the satellites 202 are connected via a wireless connection (inter-satellite link), and the gateway 203 is connected to a data network. The satellites 202 cover the surface of the Earth with a plurality of satellite beams 202a, and each beam covers a specific range. In a case where the terminal 201 is within the range of the satellite beam 202a, the terminal 201 may initiate a random access to the satellites 202 to establish a service link, and perform subsequent communication.

3) SMTC

The NR introduces a set of measurement time window configuration information for SSB measurement, i.e., an SMTC. Typically, the SMTC includes a periodicity of a time window, an offset, duration, and the like information. The SMTC is configured for each frequency point separately, and a set of SMTC information is configured on each measurement frequency point. The UE may determine a measurable time window of a corresponding frequency point based on the set of SMTC information. To match different SSB periods for different cells, this restriction has been relaxed in evolved (subsequent) versions, allowing two SMTCs to be configured on the same frequency point. For example, a denser period (smaller period, but the same offset and duration) measurement window is additionally configured for the same frequency measurement frequency point to measure a serving cell and a specific cell (indicated by a physical cell identifier (PCI) list), thereby speeding up the measurement process.

The SSB-MTC information element is described in the following table:

Table 1

| | |
|---|---|
| SSB-MTC ::= | SEQUENCE { |
| periodicityAndOffset | CHOICE { |
| sf5 | INTEGER (0..4), |
| sf10 | INTEGER (0..9), |
| sf20 | INTEGER (0..19), |
| sf40 | INTEGER (0..39), |
| sf80 | INTEGER (0..79), |
| sf160 | INTEGER (0..159) |
| }, | |
| duration | ENUMERATED { sf1, sf2, sf3, sf4, sf5 } |
| } | |
| SSB-MTC2 ::= | SEQUENCE { |
| **pci-List** | **SEQUENCE (SIZE (1..maxNrofPCIsPerSMTC))** |
| **OF PhysCellId** | **OPTIONAL,    -- Need M** |
| periodicity | ENUMERATED {sf5, sf10, sf20, sf40, sf80, spare3, spare2, spare1} |
| } | |
| SSB-MTC4List-r17::= | SEQUENCE (SIZE(1..3)) OF SSB-MTC4-r17 |
| SSB-MTC4-r17 ::= | SEQUENCE { |
| pci-List-r17 | SEQUENCE (SIZE (1..maxNrofPCIsPerSMTC)) OF PhysCellId |
| OPTIONAL,   -- Need M | |
| offset-r17 | INTEGER (0..159) |
| } | |

The SSB-MTC is a primary SMTC (legacy SMTC), and other SMTCs such as an SSB-MTC 2, an SSB-MTC 4, and the like, are SMTCs newly added based on the primary SMTC.

For example, the SSB-MTC 2 is a second SMTC, wherein the duration and offset are defaulted, like the first SMTC; the period of the second SMTC needs to be smaller than the period of the first SMTC. Consequently, the value of the period does not include 160 ms. The PCI-list indicates the cell that adopts this SMTC.

The SMTC in the NTN is more complex. Considering a long propagation distance from the satellite to the UE and a large difference in the propagation distances between different satellites, it is possible that times of arrival of the SSBs onto the UEs transmitted by the satellites may not be measured over one SMTC. For example, assuming that the satellites transmit the SSB signal at an instant t0 simultaneously, but a propagation time of satellite 1 is 10 ms, and the orbit of satellite 2 is higher, resulting in a propagation time of 15 ms, then the times of arrival of the SSBs onto the UE are respectively t0+10 and t0+15, with a difference of 5 ms. These two satellites generally fail to be measured using SMTC. Therefore, a plurality of SMTCs are also introduced in NTN, i.e., the SSB-MTC 4 in the above parameters. The plurality of SMTCs have the same periodicity and duration, but different offsets, which is apparent from the signaling. In the SMTC 4, only the offset is configured, while the periodicity and duration are inherited from the legacy SMTC parameters. Additionally, each SMTC is also associated with a PCI list indicating an ID of a target cell to be measured.

The protocol does not explicitly limit a mapping relationship between the cell ID (PCI) and the satellite, i.e., the same satellite may correspond to a plurality of different cells (PCIs) via the beam/polarization direction, and the like, or one satellite may correspond to one cell, or a plurality of satellites may correspond to one cell, and the like. Users may indirectly infer the satellite serving a cell based on ephemeris information of the cell. In a case where the ephemeris information of two cells is identical, it may be considered that the two cells correspond to the same satellite.

Each frequency point may be configured with up to four SMTCs (one legacy SSB-MTC, and up to three SSB-MTCs 4). In the RRC connected state, the network may acquire positioning information of the UE, and configure or update an accurate SMTC offset by calculating a propagation delay based on the distance between the UE and the cell to be measured. In the RRC IDLE/inactive state, the UE has not yet accessed the network, and the network may not acquire the positioning information of the UE in real time. Therefore, the UE is allowed to determine the SMTC offset based on an actual propagation delay.

The SIB 2 information element is described in Table 2:

Table 2

```
-- ASN1START
-- TAG-SIB2-START


SIB2 ::=                         SEQUENCE {
    cellReselectionInfoCommon          SEQUENCE {
        nrofSS-BlocksToAverage                 INTEGER  (2..maxNrofSS-BlocksToAverage)
OPTIONAL,        -- Need S
        absThreshSS-BlocksConsolidation                        ThresholdNR
OPTIONAL,        -- Need S
        rangeToBestCell                            RangeToBestCell
OPTIONAL,        -- Need R
        q-Hyst                      ENUMERATED {
                                dB0, dB1, dB2, dB3, dB4, dB5, dB6, dB8, dB10,
                                dB12, dB14, dB16, dB18, dB20, dB22, dB24},

        ...
    intraFreqCellReselectionInfo      SEQUENCE {
        q-RxLevMin                      Q-RxLevMin,
        q-RxLevMinSUL                            Q-RxLevMin
OPTIONAL,        -- Need R
        q-QualMin                                Q-QualMin
OPTIONAL,        -- Need S
        s-IntraSearchP              ReselectionThreshold,
        s-IntraSearchQ                           ReselectionThresholdQ
OPTIONAL,        -- Need S
        ...
        smtc                                     SSB-MTC
OPTIONAL,        -- Need S
        ss-RSSI-Measurement                      SS-RSSI-Measurement
OPTIONAL,        -- Need R
        ssb-ToMeasure                            SSB-ToMeasure
OPTIONAL,        -- Need S
        deriveSSB-IndexFromCell         BOOLEAN,
        ...,
        [[
        t-ReselectionNR-SF                       SpeedStateScaleFactors
OPTIONAL        -- Need N
        ]],
```

```
            [[
        smtc2-LP-r16                                    SSB-MTC2-LP-r16
OPTIONAL,             -- Need R
        ssb-PositionQCL-Common-r16                      SSB-PositionQCL-Relation-r16
OPTIONAL             -- Cond SharedSpectrum
            ]],
            [[
        ssb-PositionQCL-Common-r17                      SSB-PositionQCL-Relation-r17
OPTIONAL             -- Cond SharedSpectrum2
            ]],
            [[
        smtc4list-r17                                   SSB-MTC4List-r17
OPTIONAL             -- Need R
            ]]
        },
        ...,
        [[
```

The smtc4list is a measurement timing configuration list deployed in the NTN. The offset of each SSB-MTC 4 in the smtc4list is based on the assumption that a service link (the part of the link from the UE to the satellite) propagation delay between a serving cell and a neighboring cell is equal to 0 ms, and the UE may adjust the actual offset based on an actual propagation delay difference. Regarding UEs that support fewer SMTCs than those included in the list, it is up to the UE to select which SMTCs to consider.

That is, the SMTC is determined based on timing information of the serving cell. Therefore, an adjustment value of the SMTC offset may be determined based on the propagation time difference between the serving cell and the neighboring cell to be measured.

4) Impact of the SMTC on a measurement time

In comparison to a terrestrial network (TN), configuration of a plurality of SMTCs in the NTN may affect the measurement time of neighboring cells (in this disclosure, the measurement time is a relatively broad concept, which may include a detection time, a measurement time, an evaluation time, and the like). As an example under the same frequency, the times for detecting, measuring, and evaluating neighboring cells in the idle/inactive state is shown in Table 3 below. On this basis, a scaling factor $K_{multi\_SMTC}$ is also introduced. For example, the detection time is $T_{detect, NR\_Intra}$ multiplied by $K_{multi\_SMTC}$. The measurement and evaluation times are also similar.

When $T_{reselection} = 0$, in a case where the UE does not support features required by an enhanced radio resource management (RRM) or in a case where an enhanced measurement LEO-r17 is not enabled, the UE should be able to evaluate within $K_{multi\_SMTC} * T_{detect, NR\_Intra}$ whether a newly detectable intra-frequency cell meets a reselection criterion. Alternatively, in a case where the UE supports the features required by the enhanced RRM and the enhanced measurement LEO-r18 is enabled, the UE should be able to evaluate within $K_{multi\_SMTC} * T_{detect, NR\_Intra}$ whether a newly detectable intra-frequency network meets the reselection criterion. The intra-frequency cell is considered to be detectable according to the conditions defined for a corresponding band.

The parameter $K_{multi\_SMTC}$ is the scaling factor for measurement of a plurality of SMTCs associated with different satellites.

In a case where the SMTCs are not overlapped with each other:

- $K_{multi\_SMTC} = 1$ in a case where the GEO satellites are measured on the carrier;

The geosynchronous satellites are stationary relative to the Earth, and thus signal propagation time does not experience significant variations. Under the current assumption, all satellites operating on the same carrier and frequency point are of a single type, which means a hybrid scenario involving both GEO and LEO satellites may not occur.

- $K_{multi\_SMTC} = \left\lceil \dfrac{N_{LEO,i}}{N_{LEO,simul}} \right\rceil$ in a case where the LEO satellites are measured on the carrier;

In a case where the SMTCs are partially overlapped with each other:

- $K_{multi\_SMTC} = N_{SMTC,overlap}$ in a case where only the geosynchronous satellites are measured on the carrier;

- $K_{multi\_SMTC} = \sum_{i=1}^{N_{SMTC,overlap}} \left\lceil \dfrac{N_{LEO,i}}{N_{LEO,simul}} \right\rceil$ in a case where only the LEO satellites are measured on the carrier.

$N_{LEO,i}$ represents the number of LEO satellites to be measured within the i-th SMTC, $N_{LEO,simul}$ represents the number of LEO satellites that the UE may measure in parallel within one SMTC, $N_{SMTC,overlap}$ represents the number of SMTCs that are partially overlapped with each other.

Table 3

| DRX cycle length [s] | Scaling Factor (N1) | $T_{detect,NR\_Intra}$ [s] (number of DRX cycles) | $T_{measure,NR\_Intra}$ [s] (number of DRX cycles) | $T_{evaluate,NR\_Intra}$ [s] (number of DRX cycles) |
|---|---|---|---|---|
| | FR1 | | | |
| 0.32 | | 11.52 x N1 x M2 (36 x N1 x M2) | 1.28 x N1 x M2 (4 x N1 x M2) | 5.12 x N1 x M2 (16 x N1 x M2) |
| 0.64 | 1 | 17.92 x N1 (28 x N1) | 1.28 x N1 (2 x N1) | 5.12 x N1 (8 x N1) |
| 1.28 | | 32 x N1 (25 x N1) | 1.28 x N1 (1 x N1) | 6.4 x N1 (5 x N1) |
| 2.56 | | 58.88 x N1 (23 x N1) | 2.56 x N1 (1 x N1) | 7.68 x N1 (3 x N1) |

Note 1: M2 = 2 in a case where the SMTC periodicity of measured intra-frequency cell > 20ms and 1 < $N_{SMTC} \leq 4$ upon more than 1 SMTC configured at the UE; M2 = 1.5 in a case where the SMTC periodicity of measured intra-frequency cell > 20ms and $N_{SMTC}$ = 1 upon 1 SMTC configured at the UE; otherwise M2 = 1. Wherein, the $N_{SMTC}$ is the number of SMTCs configured by SAN. In a case where different SMTC periodicities are configured for different cells, the SMTC periodicity in this note is the one used by the cell being identified. During a PSS/SSS detection, the periodicity of the SMTC configured for the intra-frequency carrier is assumed, and in a case where the actual SSB transmission periodicity is greater than the SMTC configured for the intra-frequency carrier, a longer $T_{detect,NR\_intra}$ is expected.
Note 2: The UE is not required to meet the requirements for 2.56s of DRX cycle length for an Earth-moving LEO deployment.

To ensure that the SMTC follows a movement of the associated satellite when the NTN measures neighboring cells, an SMTC shifting is introduced such that the UE may adjust the position of the SMTC according to the propagation delay of the satellite.

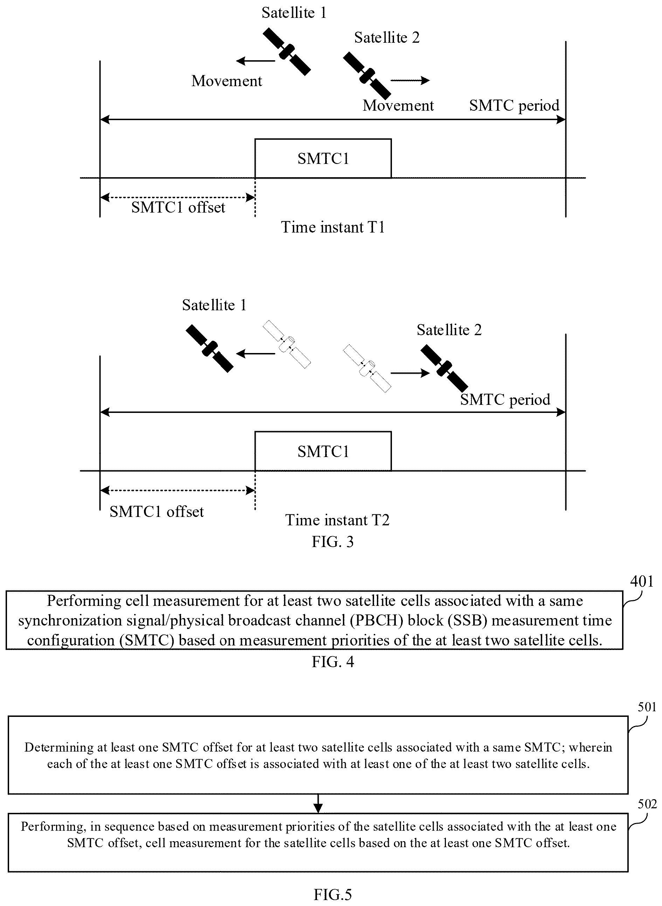

The current solution based on the UE adjusting the SMTC causes issues. For example, as illustrated in a schematic diagram of an SMTC window offset in FIG. 3, when a plurality of satellites are associated with the same SMTC and moving speeds of the plurality of satellites are different, and time offsets of the measurement windows are different, i.e., the SMTC offset directions or step sizes are different, how the network and the UE should adjust the SMTC or the SMTC offset, or adapt to the changes in the SMTC to continue the measurement remains an issue to be resolved.

FIG. 4 is a method for cell measurement according to some embodiments of the present disclosure. The method may be performed by a terminal, wherein the terminal may be the terminal in the network architecture illustrated in FIG. 1 or FIG. 2. The method may include the following steps.

In step 401, the terminal performs cell measurement for at least two satellite cells associated with the same SMTC based on measurement priorities of the at least two satellite cells.

In some embodiments, the at least two satellite cells refer to satellite cells associated with the same SMTC of candidate neighboring cells of the terminal during a cell measurement process performed by the terminal.

In summary, in the NTN network, the terminal may measure a plurality of satellite cells associated with the same SMTC based on the measurement priorities of the plurality of satellite cells, and preferentially measure satellite cells with high priorities, thereby ensuring effective cell measurement.

Based on the scheme illustrated in FIG. 4, FIG. 5 is a method for cell measurement according to some embodiments of the present disclosure. The method may be performed by a terminal, and the terminal may be the terminal in the network architecture illustrated in FIG.1 or FIG. 2. The method may include the following steps.

In step 501, the terminal determines at least one SMTC offset for at least two satellite cells associated with the same SMTC; wherein each of the at least one SMTC offsets is associated with at least one of the at least two satellite cells.

Each of the at least two satellite cells associated with the same SMTC may correspond to one SMTC offset, and the SMTC offsets of any two satellite cells may be the same or different. In the embodiments of the present disclosure, the terminal may determine at least one SMTC offset for subsequent cell measurement based on the SMTC offsets of the at least two satellite cells.

In some embodiments, upon determining at least one SMTC offset, the terminal may determine, based on the measurement priorities of the at least two satellite cells, at least one SMTC offset for cell measurement from the SMTC offsets associated with the at least two satellite cells.

For example, the at least one SMTC offset may be part or all of the SMTC offsets associated with the at least two satellite cells.

In some embodiments, the higher the measurement priority of the satellite cell, the more likely the SMTC offset associated with the satellite cell is to be selected as one of the at least one SMTC offset. That is, the terminal may preferentially select the SMTC offset associated with the satellite cell with a higher measurement priority from the at least two satellite cells as the at least one SMTC offset.

The measurement priority of the satellite cell refers to a priority of the associated satellite cell for measuring the satellite cell by the terminal.

Alternatively, the measurement priority of the satellite cell refers to the priority of the satellite cell for measurement by the terminal.

In some embodiments, the measurement priorities of the at least two satellite cells are determined by at least one of:

1) A descending order of the PCIs of the at least two satellite cells

In some embodiments, each satellite cell has a PCI, a descending order of the measurement priorities of the at least two satellite cells may be represented by arranging the at least two satellite cells in a descending of the PCIs. That is, the larger the PCI associated with the satellite cell, the higher the measurement priority of the satellite cell.

2) An ascending order of the PCIs of the at least two satellite cells

In some embodiments, an ascending order of the measurement priorities of the at least two satellite cells may be represented by arranging the at least two satellite cells in an ascending order of the PCIs. That is, the smaller the PCI associated with the satellite cell, the higher the measurement priority of the satellite cell.

3) A descending order of the SMTC offsets of the at least two satellite cells

In some embodiments, a descending order of the measurement priorities of the at least two satellite cells may be represented by arranging the at least two satellite cells in a descending order of the SMTC offsets. That is, the larger the SMTC offset associated with the satellite cell, the higher the measurement priority of the satellite cell.

4) An ascending order of the SMTC offsets of the at least two satellite cells

In some embodiments, an ascending order of the measurement priorities of the at least two satellite cells may be represented by arranging the at least two satellite cells in an ascending of the SMTC offsets. That is, the smaller the SMTC offset associated with the satellite cell, the higher the measurement priority of the satellite cell.

5) A configuration order of the at least two satellite cells in a neighboring cell list

The neighboring cell list may be the list configured by the network for the terminal.

For example, the neighboring cell list may be a list configured by the network over the SSB, or the neighboring cell list may be a list configured by the network based on RRC information.

In some embodiments, the neighboring cell list includes:

a list of neighboring cells configured on the corresponding frequency in a system information block (SIB) 3; or
a list of neighboring cells configured on the corresponding frequency in a system in a SIB4; or
a PCI list in the SMTC; or
a neighboring cell list in the SIB 19.

In some embodiments, the SIB 3 information element may be illustrated in Table 4:

Table 4

| SIB3 information element | | |
|---|---|---|
| -- ASN1START | | |
| -- TAG-SIB3-START | | |
| SIB3 ::= | SEQUENCE { | |
| **intraFreqNeighCellList** | | **IntraFreqNeighCellList** |
| **OPTIONAL,    -- Need R** | | |
| intraFreqExcludedCellList | | IntraFreqExcludedCellList |
| OPTIONAL,    -- Need R | | |
| ..., | | |
| ]] | | |
| } | | |
| **IntraFreqNeighCellList ::=** | **SEQUENCE (SIZE (1..maxCellIntra)) OF** | |
| **IntraFreqNeighCellInfo** | | |

| **IntraFreqNeighCellInfo ::=** | **SEQUENCE {** | |
|---|---|---|
| **physCellId** | **PhysCellId,** | |
| q-OffsetCell | Q-OffsetRange, | |
| q-RxLevMinOffsetCell | | INTEGER    (1..8) |
| OPTIONAL,    -- Need R | | |
| q-RxLevMinOffsetCellSUL | | INTEGER    (1..8) |
| OPTIONAL,    -- Need R | | |
| q-QualMinOffsetCell | | INTEGER    (1..8) |
| OPTIONAL,    -- Need R | | |
| **priority** | **Priority** | |
| ... | | |
| } | | |

In some embodiments, the SIB 4 information element may be illustrated in Table 5:

Table 5

| SIB4 information element |
|---|
| -- ASN1START |
| -- TAG-SIB4-START |
| SIB4 ::=                              SEQUENCE { |
|        interFreqCarrierFreqList            InterFreqCarrierFreqList, |
|        lateNonCriticalExtension                                    OCTET     STRING OPTIONAL, |
|        ..., |
|    } |
| |
|        InterFreqCarrierFreqList ::=        SEQUENCE (SIZE (1..maxFreq)) OF InterFreqCarrierFreqInfo |
| --》 inter-frequency point list |
| |
|    Each frequency point includes the following information: frequency point |
|        InterFreqCarrierFreqInfo ::=        SEQUENCE { |
|            dl-CarrierFreq                    ARFCN-ValueNR, |
|            frequencyBandList                               MultiFrequencyBandListNR-SIB OPTIONAL,     -- Cond Mandatory |
|            frequencyBandListSUL                            MultiFrequencyBandListNR-SIB OPTIONAL,     -- Need R |
|            nrofSS-BlocksToAverage              INTEGER  (2..maxNrofSS-BlocksToAverage) OPTIONAL,     -- Need S |
|            absThreshSS-BlocksConsolidation                             ThresholdNR OPTIONAL,     -- Need S |
|            smtc                                                  SSB-MTC OPTIONAL,     -- Need S |
|            ssbSubcarrierSpacing                SubcarrierSpacing, |
|            ssb-ToMeasure                                       SSB-ToMeasure OPTIONAL,     -- Need S |
|            ..., |
|            cellReselectionPriority                            CellReselectionPriority OPTIONAL,     -- Need R |
|            cellReselectionSubPriority                         CellReselectionSubPriority OPTIONAL,     -- Need R |
|            q-OffsetFreq                                         Q-OffsetRange DEFAULT dB0, |

| | |
|---|---|
| **interFreqNeighCellList** | **InterFreqNeighCellList** |
| **OPTIONAL,     -- Need R** | |
|        interFreqExcludedCellList | InterFreqExcludedCellList |
| OPTIONAL,     -- Need R | |
|        ... | |
|    } | |

In some embodiment the SIB19 information element may be illustrated as the following Table 6:

Table 6

| SIB19 information element |
|---|
| -- ASN1START |
| -- TAG-SIB19-START |
| |
| SIB19-r17 ::= SEQUENCE { |
|     ntn-Config-r17                                         NTN-Config-r17 OPTIONAL,     -- Need R |
|     t-Service-r17                                       INTEGER (0..549755813887) OPTIONAL,     -- Need R |
|     referenceLocation-r17                          ReferenceLocation-r17 OPTIONAL,     -- Need R |
|     distanceThresh-r17                              INTEGER(0..65525) OPTIONAL,     -- Need R |
|     ntn-NeighCellConfigList-r17               NTN-NeighCellConfigList-r17 OPTIONAL,     -- Need R |
|     lateNonCriticalExtension                OCTET   STRING OPTIONAL, |
| |
|     ..., |
|     [[ |
|     ntn-NeighCellConfigListExt-v1720          NTN-NeighCellConfigList-r17 OPTIONAL     -- Need R |
|     ]] |
|     } |
| |
| **NTN-NeighCellConfigList-r17 ::=            SEQUENCE (SIZE(1..maxCellNTN-r17))   OF NTN-NeighCellConfig-r17** |
| |
|     NTN-NeighCellConfig-r17 ::=           SEQUENCE { |
|     ntn-Config-r17                                     NTN-Config-r17 OPTIONAL,     -- Need R |
|     carrierFreq-r17                                ARFCN-ValueNR OPTIONAL,     -- Need R |
|     physCellId-r17                                  PhysCellId OPTIONAL     -- Need R |
|     **priority** |
| **Priority**                                                       } |
| |
|     -- TAG-SIB19-STOP |
|     -- ASN1STOP |

The intraFreqNeighCellList may be configured in the SIB 3 in Table 4, the interFreqNeighCellList may be configured in the SIB 4 in Table 5, and the NTN-NeighCellConfigList-r17 may be configured in the SIB 19 in Table 6. Additionally, as illustrated in Table 1, the PCI list may be configured in the SMTC. The order of the at least two satellite cells in the neighboring cell list or PCI list may be used to indicate the order of the measurement priorities associated with the at least two satellite cells.

For example, the order of the at least two satellite cells in the neighboring cell list or PCI list may be used to indicate the order of the measurement priorities associated with the at least two satellite cells from high to low; or the order of the at least two satellite cells in the neighboring cell list or PCI list may be used to indicate the order of the measurement priorities associated with the at least two satellite cells from low to high.

6) The priority associated with at least two satellite cells configured by the network.

In some embodiments, the measurement priorities associated with the at least two satellite cells may also be explicitly configured for the terminal by a network device (such as a ground base station/satellite base station).

In some embodiments, the measurement priorities associated with the at least two satellite may be explicitly configured for the terminal by the network device over the SSB.

In some embodiments, the priorities of at least two satellite cells configured by the network include:

priorities configured for the at least two satellite cells in a SIB 3; or
priorities configured for the at least two satellite cells in a SIB 4; or
priorities configured for the at least two satellite cells in a SIB 19; or
priorities configured for the at least two satellite cells in a PCI list in an SMTC.

For example, the network device may explicitly configure the measurement priority that includes each neighboring cell for the terminal via the SIB 3 in Table 4, the SIB 4 in Table 5, the SIB 19 in Table 6, and the priority information (priority) in the SMTC in Table 1. Each of the neighboring cells contains at least two satellite cells associated with the same SMTC.

Alternatively, the measurement priorities of the at least two satellite cells may also be explicitly configured for the terminal by the network device via other messages (such as RRC message) other than the SSB.

7) A descending order of the number of cells in the cell group to which each of the at least two satellite cells belongs (the cell group is acquired by organizing at least two satellite cells based on the SMTC offsets of the at least two satellite cells)

In some embodiments, the at least two satellite cells may be organized into groups based on the SMTC offsets to acquire at least one cell group, wherein the SMTC offsets associated with the satellite cells in each cell group are the same, and the SMTC offsets associated with the satellite cells in different cell groups are different.

Subsequently, the measurement priority of each satellite cell is determined based on a descending order of the number of cells in each cell group. That is, the more satellite cells in a cell group, the higher the measurement priority of the satellite cells in that cell group.

For example, in a case where four satellite cells are present (satellite cells a, b, c, and d), the SMTC offset of with satellite cell a is 0 ms, the SMTC offset of satellite cell b is 5 ms, the SMTC offset of satellite cell c is 0 ms, and the SMTC offset of satellite cell d is 10ms. In this case, the four satellite cells may be organized into three groups, in which satellite cell a and satellite c belong to one group, satellite cell b is one group by itself, and satellite cell d is one group.

Upon determination of the measurement priorities, the measurement priorities of the four satellite cells may be as follows: the measurement priority of satellite cell a = the measurement priority of satellite cell > the measurement priority of satellite cell b = the measurement priority of satellite cell d.

8) An ascending order of the number of cells in the cell group to which each of the at least two satellite cells belongs.

In some embodiments, upon organizing the at least two satellite cells based on the SMTC offsets, the measurement priority of each satellite cell is determined based on an ascending order of the number of cells in each cell group. That is, the more satellite cells in a cell group, the lower the measurement priority of the satellite cell in the cell group.

For example, using the same above example involving the four satellite cells a, b, c, and d. Upon determination of the measurement priorities, the measurement priorities of the four satellite cells may be as follows: the measurement priority of satellite b = the measurement priority of satellite cell d > the measurement priority of satellite a = the measurement priority of satellite cell c.

In some embodiments, a value of the at least one SMTC offset may be different from each other. In such a case where one SMTC offset is associated with a plurality of satellite cells, the measurement priorities of the plurality of satellite cells may be different.

For example, in a case where the at least two satellite cells include four satellite cells (satellite cells a, b, c, and d), the SMTC offset of satellite cell a is 0 ms, the SMTC offset of satellite cell b is 5 ms, the SMTC offset of satellite cell c is 0ms, and the SMTC offset of satellite cell d is 10ms. Additionally, the measurement priority of satellite cell a > the measurement priority of satellite cell b > the measurement priority of satellite cell c > the measurement priority of satellite cell d. In such a case, the SMTC offsets of satellite cell a and satellite cell c are the same, however the measurement priorities are different. Based on this, the terminal may determine that at least one SMTC offset contains one SMTC offset of 0 ms, and that the SMTC offset is associated with satellite cell a and satellite cell c.

In some embodiments, in the at least one SMTC offset, some or all of the SMTC offsets may have the same value, and each SMTC offset is associated with one satellite cell, or each SMTC offset is associated with one or more satellite cells with the same measurement priority.

For example, in a case where the at least two satellite cells include four satellite cells (satellite cells a, b, c, and d), the SMTC offset of satellite cell a is 0 ms, the SMTC offset of satellite cell b is 5 ms, the SMTC offset of satellite cell c is 0 ms, and the SMTC offset of satellite cell d is 10 ms. Additionally, the measurement priority of satellite cell a > the measurement priority of satellite cell b > the measurement priority of satellite cell c > the measurement priority of satellite cell d. In such a case, the at least one SMTC offset determined by the terminal includes three respective SMTC offsets:

an SMTC offset 1 - the value is 0 ms, associated with satellite cell a;
an SMTC offset 2 - the value is 5 ms, associated with satellite cell b; and
an SMTC offset 3 - the value is 0 ms, associated with satellite cell c.

Wherein the SMTC offset 1 and the SMTC offset 3 are associated with the same offset, but are associated with cells with different measurement priorities.

In step 502, the terminal sequentially performs cell measurement for the satellite cells based on the at least one SMTC offset based on the measurement priorities of the satellite cells associated with the at least one SMTC offsets.

In some embodiments, the satellite cells associated with the at least one SMTC offset refer to the satellite cells in the at least two satellite cells that are associated with the at least one SMTC offset.

The cell measurement for the satellite cells based on the at least one SMTC offset is performed in sequence based on the measurement priorities of the satellite cells associated with the at least one SMTC offsets may refer to first adjusting the SMTC offsets with a high measurement priority associated with the satellite cell, and subsequently performing cell measurement for the satellite cells associated with the adjusted SMTC offsets.

For example, in a case where at least one SMTC offset is determined to be 0 ms and 5 ms, the SMTC offset of 0 ms is associated with satellite cell a and satellite cell c, and the SMTC offset of 5 ms is associated with satellite cell b. Additionally, the measurement priorities of satellite cell a and satellite cell c is higher than the measurement priority of satellite cell b. In this case, the terminal preferentially adjusts and measures satellite cell a and satellite cell c based on the SMTC offset of 0 ms; afterwards, the terminal adjusts and measures satellite c based on the SMTC offset of 5 ms.

In some embodiments, regarding one SMTC offset in at least one SMTC offset, in a case where the one SMTC offset is associated with a plurality of satellite cells, and the measurement priorities of the plurality of satellite cells associated with the one SMTC offset are not identical, upon measuring the satellite cell associated with the one SMTC offset based on the SMTC offset, the terminal may measure part or all of the plurality of satellite cells associated with the one SMTC offset based on a descending order of measurement priorities.

For example, in a case where satellite cell a, satellite cell b, satellite cell c and satellite cell d are associated with the same SMTC offset, and the measurement priority of satellite cell a > the measurement priority of satellite cell b > the measurement priority of satellite cell c > the measurement priority of satellite cell d, and the number of cells that the terminal may measure simultaneously is 2. In this case, within one SMTC period, following an adjustment based on the SMTC offset, the terminal first measures satellite cell a and satellite cell b. In a case where a remaining time used for cell measurement within an SMTC period is sufficient to perform cell measurement, the terminal may continue to measure satellite cell c and satellite cell d. Otherwise, the terminal does not measure satellite cell c and satellite cell d.

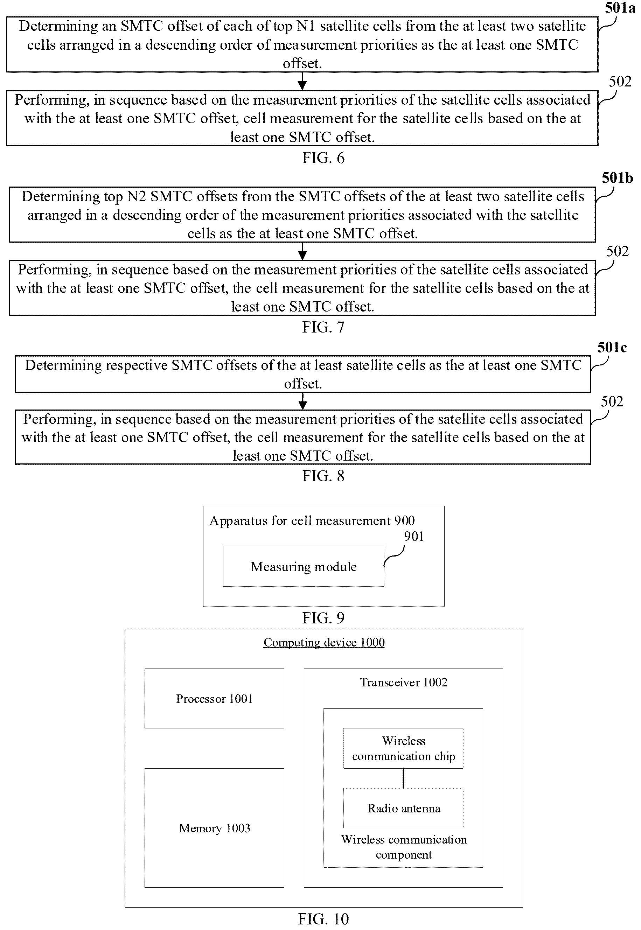

Based on the scheme illustrated in FIG. 5, FIG. 6 is a method for cell measurement according to some embodiments of the present disclosure. The method may be performed by a terminal, and the terminal may be the terminal in the network architecture illustrated in FIG. 1 or FIG. 2. Step 501 in the above embodiments illustrated in FIG. 5 may be implemented as step 501a:

In step 501a, the terminal determines the SMTC offset of each of the top N1 satellite cells from the at least two satellite cells arranged in a descending order of measurement priorities as the least one SMTC offset.

In some embodiments, regarding the at least two satellite cells associated with the same SMTC, the terminal may arrange the at least two satellite cells in a descending order of measurement priorities, and determine the SMTC offset of each of the top N1 satellite cells in the arrangement as the at least one SMTC offset.

For example, in a case where at least two satellite cells include satellite cell a, satellite cell b, satellite cell c and satellite cell d, and the measurement priority of satellite cell a > the measurement priority of satellite cell b > the measurement priority of satellite cell c > the measurement priority of satellite cell d, and a value of N1 is 2. In this case, the terminal may determine the SMTC offset of satellite cell a and the SMTC offset of satellite cell b as the at least one SMTC offset.

In some embodiments, during determination of the at least one SMTC offset, in a case where in the at least two satellite cells, the SMTC offsets of the top N1 satellite cells arranged in a descending order of measurement priorities contain SMTC offsets with the same value, the SMTC offsets with the same value may be merged.

For example, in a case where the terminal determines the SMTC offset of satellite cell a and the SMTC offset of satellite cell b as the at least one SMTC offset, and the values of the SMTC offset of satellite cell a and the SMTC offset of satellite cell b are the same (for instance, both are 0 ms), the at least one SMTC offset determined by the terminal refers to a single SMTC offset of 0 ms, and the single SMTC offset is associated with the two satellite cells a and b.

In some other embodiments, during determination of the at least one SMTC offset, in a case where the SMTC offsets of the top N1 satellite cells arranged in a descending order of measurement priorities contain SMTC offsets with the same value, the SMTC offsets with the same value are not merged.

For example, in a case where the terminal determines the SMTC offset of satellite cell a and the SMTC offset of satellite cell b as the at least one SMTC offset, and the values of the SMTC offset of satellite cell a and the SMTC offset of satellite cell b are the same (for example, both are 0ms), the at least one SMTC offset determined by the terminal refers to two SMTC offsets with values of 0 ms, and the two SMTC offsets are associated with satellite cell a and satellite cell b, respectively.

In some other embodiments, during determination of at least one SMTC offset, in a case where in the at least two satellite cells, the SMTC offsets of the top N1 satellite cells arranged in a descending order of measurement priorities contain SMTC offsets with the same value, and the satellite cells with the SMTC offsets with the same value have the same measurement priority, the SMTC offsets with the same value may be merged.

For example, in a case where at least two satellite cells include satellite cell a, satellite cell b, satellite cell c and satellite cell d, and the measurement priority of satellite cell a = the measurement priority of satellite cell b > the measurement priority of satellite cell c > the measurement priority of satellite cell d, the value of N1 is 2, and the SMTC offset of satellite cell a and the SMTC offset of satellite cell b are the same (for example, both are 0ms). In this case, at least one SMTC offset determined by the terminal is a single SMTC offset of 0 ms, and the SMTC offset corresponds to the two satellite cells a and b.

In some embodiments, in a case where the SMTC offsets of a first satellite cell and a second satellite cell of the at least two satellite cells are the same, wherein the first satellite cell belongs to the top N1 satellite cells, and the second satellite cell does not belong to the top N1 satellite cells further includes:

During the process of performing cell measurement based on the SMTC offset of the first satellite cell, the second satellite cell is measured while preferentially measuring the first satellite cell.

In the above embodiment, in a case where two satellite cells are present with different measurement priorities, but have the same SMTC offset (for example, both are 5 ms), and in the two satellite cells, the satellite cell with a higher measurement priority is within the top N1 satellite cells, and the satellite cell with a lower measurement priority is outside the top N1 satellite cells. In such a case, regardless of whether the SMTC offsets with the same values are merged, at least one of the SMTC offsets has an SMTC offset of 5 ms. Based on this case, subsequent to adjusting the SMTC offset according to 5 ms, the terminal may preferentially measure the satellite cells with higher measurement priorities, and may also measure the satellite cells with lower measurement priorities.

For example, in a case where the at least two satellite cells include satellite cell a (SMTC offset is 5 ms), satellite cell b (SMTC offset is 0ms), satellite cell c (SMTC offset is 5 ms) and satellite cell d (SMTC offset is 10 ms), and the measurement priority of satellite cell a > the measurement priority of satellite cell b > the measurement priority of satellite cell c > the measurement priority of satellite cell d, and the value of N1 is 2. In this case, the terminal may determine the SMTC offset of satellite cell a and the SMTC offset of satellite cell b as the at least one SMTC offsets. Upon adjustment based on the SMTC offset of satellite cell a (i.e., 5 ms), the terminal may additionally measure satellite cell c on the basis of preferentially measuring satellite cell a.

In some embodiments, during the process of performing cell measurement based on the SMTC offset of the first satellite cell, the second satellite cell is also measured in preferential measurement of the first satellite cell as follows:

In the process of measuring the cell based on the SMTC offset of the first satellite cell, in a case where the measurement of the second satellite cell does not affect the time used for measuring the cell, the second satellite cell is also measured in preferential measurement of the first satellite cell.

In a case where two satellite cells are present with different measurement priorities, but with the same SMTC offset (for example, both are 5 ms), and in the two satellite cells, the satellite cell with the higher measurement priority is within the top N1 satellite cells, and the satellite cell with the lower measurement priority is outside the top N1 satellite cells. In such a case, after the terminal adjusts the SMTC offset according to 5 ms, while preferentially measuring the satellite cell with the higher measurement priority, in a case where the measurement of the satellite cell with the lower measurement priority does not affect a time used for cell measurement, the satellite cells with the high measurement priorities are preferentially measured.

The time used for cell measurement refers to the time used for cell measurement within an SMTC period adjusted based on the SMTC offset.

For example, in a case where the at least two satellite cells include satellite cell a (SMTC offset is 5 ms), satellite cell b (SMTC offset is 0 ms), satellite cell c (SMTC offset is 5 ms) and satellite cell d (SMTC offset is 10 ms), and the measurement priority of satellite cell a > the measurement priority of satellite cell b > the measurement priority of satellite cell c > the measurement priority of satellite cell d, and the value of N1 is 2. In such a case, the terminal may determine the SMTC offset of satellite cell a and the SMTC offset of satellite cell b as the at least one SMTC offset, wherein the number of cells measured simultaneously by the terminal is 1, and the time required for the terminal to measure one satellite cell is 5 ms; In a case where there is sufficient time to complete the cell measurement of satellite cell c in which the time used for cell measurement is 10 ms in an SMTC period, and the terminal adjusts the SMTC offset according to 5 ms, while preferentially measuring the satellite cell a during the current SMTC period. In such a case, the terminal may measure satellite cell c during the current SMTC period. Conversely, in a case where there is not sufficient time to complete the measurement of satellite cell c during an SMTC period, the time used for cell measurement is 6 ms, after the terminal adjusts the SMTC offset according to 5 ms, while giving priority to completing the measurement of satellite cell a during the current SMTC period. In such a case, the terminal may not measure satellite cell c during the current SMTC period.

In some embodiments, N1 satisfies at least one of the following:

1) N1 is determined according to a capability of the terminal.

In the embodiments of the present disclosure, the value of N1 may be determined by the capability of the terminal. For example, the higher the capability of the terminal, the larger the value of N1.

2) N1 is determined by the network configuration.

In the embodiments of the present disclosure, the value of N1 may be configured by the network. For example, the value of N1 may be configured by the network device through SSB, or by the network device through RRC.
In some embodiments, the value of N1 may also be determined according to the capabilities of the terminal and the network configuration.
For example, the network device may configure the N1 value for each terminal capability, and configure the N1 value associated with each terminal capability to the terminal, and the terminal selects the corresponding N1 value according to its own capability.
For another example, the network device configures multiple N1 values for the terminal according to the capability of the terminal, and instructs the terminal to enable one of the values via RRC messages and the like.

3) N1 is determined for each frequency point.

In some embodiments, a value of N1 corresponds to each frequency point, and the values of N1 associated with different frequency points may be the same or different.
Typically, each frequency point may correspond to one SMTC.

4) N1 is shared by a plurality of frequencies

In some embodiments, the plurality of frequency points may correspond to the same value of N1.
In some other embodiments, the value of N1 may also be predefined by a protocol.
Based on the scheme in FIG. 5, FIG.6 is a method for cell measurement according to some embodiments of the present disclosure. The method may be performed by a terminal, and the terminal may be the terminal in the network architecture illustrated in FIG. 1 or FIG. 2. Step 501 in the embodiment illustrated in FIG. 5 above may be implemented as step 501b:
In step 501b, the terminal determines top N2 SMTC offsets of the respective SMTC offsets of at least two satellite cells arranged in a descending order based on the measurement priorities of the corresponding satellite cells as the at least one SMTC offset.
In some embodiments, the terminal may arrange the SMTC offsets of the at least two satellite cells respectively in a descending order of the measurement priorities of the satellite cells, and take the top N2 SMTC offsets as the at least one SMTC offset.
For example, in a case where at least two satellite cells include satellite cell a, satellite cell b, satellite cell c and satellite cell d, and the measurement priority of satellite cell a > the measurement priority of satellite cell b > the measurement priority of satellite cell c > the measurement priority of satellite cell d. Additionally, the SMTC offset of satellite cell a is an SMTC offset 1, the SMTC offset of satellite cell b is an SMTC offset 2, the SMTC offset of satellite cell c is an SMTC offset 3, the SMTC offset of satellite cell d is an SMTC offset 4, and the value of N2 is 2. In such a case, the terminal may determine the SMTC offset 1 and the SMTC offset 2 as the at least one SMTC offset.
In some embodiments, in the process of determining the top N2 SMTC offsets of the SMTC offsets of at least two satellite cells arranged in descending order based on the measurement priorities of the corresponding satellite cells, as the at least one SMTC offset, the terminal may merge the same SMTC offsets, i.e., duplicate the SMTC offsets of the at least two satellite cells. In such a case, in the duplicated SMTC offsets, one SMTC offset may correspond to one or a plurality of satellite cells, and in a case where one SMTC offset corresponds to a plurality of satellite cells, the measurement priorities of the multiple satellite cells may be different. In such a case, the terminal may arrange the duplicated SMTC offsets in descending order based on the highest priority among the measurement priorities of the corresponding satellite cells, and take the top N2 SMTC offsets as the at least one SMTC offset.

For example, in a case where at least two satellite cells include satellite cells a to e, the measurement priority of satellite cell a > the measurement priority of satellite cell b > the measurement priority of satellite cell c > the measurement priority of satellite cell d > the measurement priority of satellite cell e. Additionally, the SMTC offsets of satellite cells a to d are SMTC offsets 1 to 5, and the values of the SMTC offset 1 and the SMTC offset 3 are the same, and the values of the SMTC offset 2 and the SMTC offset 4 are the same, then the SMTC offset 1 and the SMTC offset 3 are merged into one SMTC offset (for example, merged into a new SMTC offset 1, and the new SMTC offset 1 corresponds to the satellite cell a and satellite cell c, wherein the highest priority is the measurement priority of satellite cell a), and merge the SMTC offset 2 and the SMTC offset 4 into one SMTC offset (for example, merged into a new SMTC offset 2, and the new SMTC offset 2 corresponds to satellite cell b and satellite cell d, wherein the highest priority is the measurement priority of satellite cell b), the order of the merged SMTC offsets is: the new SMTC offset 1, the new SMTC offset 3, the new SMTC offset 5. In a case where the value of N2 is 2, the terminal may determine the new SMTC offset 1 and the new SMTC offset 3 as the at least one SMTC offsets.

In some embodiments, upon arranging the SMTC offsets of at least two satellite cells in descending order based on the measurement priorities of the respective satellite cells, regarding two adjacent SMTC offsets, in a case where the values of the two SMTC offsets are the same, the two SMTC offsets are merged. Finally, the terminal determines the SMTC offset arranged in the top N2 bits of the merged SMTC offsets as the at least one SMTC offset.

For example, in a case where at least two satellite cells include satellite cell a, satellite cell b, satellite cell c and satellite cell d, and the measurement priority of satellite cell a > the measurement priority of satellite cell b > the measurement priority of satellite cell c > the measurement priority of satellite cell d. Additionally, the SMTC offsets of satellite cells a to d are SMTC offsets 1 to 4, and the values of the SMTC offset 1 and the SMTC offset 2 are the same, and the SMTC offset 1 and the SMTC offset 2 are adjacent, the SMTC offset 1 and the SMTC offset 2 are merged into one SMTC offset (for example, merged into a new SMTC offset 1), and in a case where the value of N2 is 2, the terminal may determine the new SMTC offset 1 and the SMTC offset 3 as the at least one SMTC offset. In such a case, the new SMTC offset 1 corresponds to the two satellite cells (i.e., satellite cell a and satellite cell b).

In some embodiments, based on the measurement priorities of the satellite cells associated to the at least one SMTC offset, measuring the satellite cells associated to the at least one SMTC offset based on the at least one SMTC offset includes:

for each SMTC offset of the at least one SMTC offset, performing cell measurement for at most N3 satellite cells of the satellite cells associated with the SMTC offset;

The value of N3 is determined by the upper limit of the number of cells measured simultaneously by the terminal and the time for cell measurement within an SMTC period.

In the embodiment of the present disclosure, in a case where a plurality of satellite cells corresponds to some SMTC offset in the at least one SMTC offset, the terminal may measure N3 satellite cells among the plurality of satellite cells based on the measurement priority in descending order of the multiple satellite cells.

For example, in a case where one SMTC offset corresponds to three satellite cells, and the value of N3 is 2, upon adjusting based on the SMTC offset, the terminal may measure at most two satellite cells with the highest measurement priority in the current SMTC period.

For another example, in a case where one SMTC offset corresponds to two satellite cells, and the value of N3 is 3, upon adjusting based on the SMTC offset, the terminal may measure all of the two satellite cells in the current SMTC period.

The value of N3 is determined by the upper limit of the number of cells measured simultaneously by the terminal, and the time for cell measurement within the SMTC period may be as follows:

The terminal determines the number of times the terminal may perform cell measurement within one SMTC period based on the time for the cell measurement within one SMTC period, and the terminal multiplies the number by the number of cells measured simultaneously by the terminal to obtain the value of N3.

For example, the upper limit of the number of cells that the terminal may measure simultaneously is 2, the time for cell measurement within one SMTC period is 10 ms, and the time required for the terminal to measure the cells each time is 5 ms. In such a case, the number of times the terminal may measure the cells within the SMTC period is 2, and the value of N3 is 4.

Based on the scheme in FIG. 6 or FIG. 7, in some embodiments, the time for cell measurement is determined by a time scaling factor. The time scaling factor may be determined as follows:

1) The time scaling factor is determined based on the number of at least two satellite cells and the number of satellite cells that the terminal is capable of measuring simultaneously.

The terminal may divide the number of at least two satellite cells by the number of satellite cells that the terminal is capable of measuring simultaneously to acquire the number of measurements required for the terminal to measure all the at least two satellite cells, and use the number of measurements as the time scaling factor.

In such a case, the time for cell measurement may be a product of the time scaling factor and the time for each cell measurement.

In some embodiments, the time for cell measurement may be a detection time, a measurement time, or an evaluation time, and the like used by a terminal for cell measurement within one SMTC period.

2) The time scaling factor is determined based on a sum of the number of satellite cells associated with each of the at least one SMTC offsets and the number of satellite cells that the terminal is capable of measuring simultaneously.

The terminal may separately determine the corresponding time scaling factor for each SMTC offset to be adjusted. For example, regarding the SMTC offset, the terminal divides the number of satellite cells associated with the SMTC offset by the number of satellite cells allowed to be measured simultaneously by the terminal, and acquires the number of measurements required for the terminal to measure the satellite cells associated with the SMTC offset, and uses the number of measurements as the time scaling factor.

In such a case, within the SMTC period adjusted by the SMTC offset, the time for cell measurement by the terminal may be the product of the time scaling factor and the time for each cell measurement performed by the terminal.

Based on the scheme in FIG. 5, FIG. 8 is a method for cell measurement based on some embodiments of the present disclosure. The method may be performed by a terminal, and the terminal may be the terminal in the network architecture illustrated in FIG. 1 or FIG. 2. Step 501 in the embodiment in FIG. 5 above may be implemented as step 501c:

In step 501c, the terminal determines the SMTC offsets of at least two satellite cells are as the at least one SMTC offset.

In the embodiments of the present disclosure, the terminal may use the SMTC offset of each satellite cell in at least two satellite cells as one SMTC offset to acquire the at least one SMTC offset.

In some embodiments, upon performing cell measurement based on the at least one SMTC offset, a time used for cell measurement (i.e., the total elapsed time while performing cell measurement based on the at least one SMTC offset) includes:

a product of a basic measurement time and a number of measurement groups; or

a product of a basic measurement time, a number of measurement groups and a first scaling factor, wherein the first scaling factor is a maximum value of the scaling factors associated with the at least one SMTC offset, wherein the scaling factor associated with the SMTC offset is determined by the number of satellite cells associated with the SMTC offset and the number of satellite cells allowed to be measured simultaneously by the terminal; or

a sum of measurement times corresponding to the at least one SMTC offset; the measurement time corresponding to the SMTC offset is the product of the basic measurement time and the scaling factor associated with the SMTC offset.

The number of measurement groups may be the number of groups of the at least two satellite cells in a case where the terminal measures the at least two satellite cell groups based on the at least two SMTC offset; in some embodiments, the number of measurement groups may be the number of the at least one SMTC offset.

The basic measurement time may be configured by the SMTC.

According to the technical solutions according to the embodiments of the present disclosure, a method for UE measurement in a satellite communication system (NTN) is provided. The method includes at least the following content.

1) In a case where it is impossible for all of a plurality of satellite cells associated with the same SMTC to be measured within a current time window, the UE performs measurement based on the SMTC offset adjusted by the SMTC or some pre-configured priority rule (such as a cell priority, or an offset priority).

2) The UE needs to satisfy new measuring time requirements, which may include:

The UE only measures the cells/satellites with high priority or matching SMTC offsets.

The UE adjusts the offset of the SMTC in advance attempting to measure all associated cells/satellites as much as possible, but the measurement time is prolonged.

A scheme of adjusting the SMTC position by the user may be as follows:

The user selects part or all of the candidate neighboring cells for measurement. In a designated time interval, one adjusted SMTC offset is configured for one SMTC, and the SMTC offset is adjusted following the completion of the measurement.

Based on the associated neighboring cell, a position of the SMTC is adjusted and measured based on top N1 groups of neighboring cells or by modulating the SMTC N2 times, and the remaining neighboring cells are discarded and not measured.

In some embodiments, N1 or N2 is determined by a user capability and/or a network configuration.

In some embodiments, N1 or N2 may be the user capability or the network configuration per frequency point.

In a case where a value of N1 is greater than the actual number of neighboring cell groups, or a value of N2 is greater than the number of SMTCs that needs to be adjusted, the user needs to measure all candidate neighboring cells, which is equivalent to measuring all neighboring cells.

I) Measure and adjust the SMTC position in an order of priorities and measure the associated cells until all configured neighboring cells are measured.

The priority or the order of priority may be determined in the following manners:

i) Determining the priority of the neighboring cell based on the PCI: the larger/smaller the PCI, the higher the priority. In some embodiments, each PCI is used as a different priority.
ii) Determining the priority or the order of priority based on the offset priority (such as measuring a positive offset first, and subsequently measuring a negative offset).
iii) Determining the priority based on the configuration order of the neighboring cell list, such as the earlier/later the configuration, the higher the priority. Specifically, the neighboring cell configuration is:
The neighboring cell list may refer to the neighboring cell list configured in SIB3 or SIB4. SIB3 is used to configured intra-frequency points, and SIB4 is used to configure inter-frequency points. The neighboring cell list may contain a plurality of inter-frequency points, or the neighboring cell list may also refer to the PCI-list associated with the SMTC, or the neighboring cell list may also refer to the neighboring cell list configured in SIB 19.
iv) Calculating the SMTC offset associated with each respective neighboring cell, and grouping the SMTC offsets based on the results, and determining the priority based on the number of satellites/neighboring cell in each group.
v) Introducing network indication information to indicate the priority.

Impact on the measurement time: in a case where the SMTC offsets determined by a plurality of satellites of one SMTC are different, the measurement time needs to be modified.

I) The current calculation method remains unchanged, however the number of cells/satellites that the user may measure is reduced.
II) The UE adjusts the offset of the SMTC in advance to measure all associated cells/satellites as much as possible, but the measurement time is prolonged.

Embodiment 1: The SMTC offsets are adjusted in sequence to satisfy sequential measurements of a plurality of cells/ satellites.

Under normal circumstances, an SMTC is only allowed to have one offset at a same time instant or in a specific time interval. In a case where the SMTC offset needs to be moved to measured different satellites, a behavior and a process of the dynamic adjustment of the SMTC needs to be regulated a specific order. For example, in a case where the SMTC is associated with 3 PCIs, and a first two neighboring cells are the same satellite or have the same SMTC offset of 10 ms; and the SMTC offset determined for a third neighboring cell is 15 ms. In such a case, the user typically first adjusts the SMTC offset to 10 ms and measures the first two neighboring cells; following the measurement, a decision of whether to adjust the SMTC offset to 15 ms based on the scenario before continuing to measure the third neighboring cell.

In a case where a plurality of satellites is associated with the same SMTC at the same time, and SMTC windows determined by a propagation delay of different satellites are different, the user determines which satellite to dynamically move the SMTC window based on the priority of the neighboring cells. In a case where all neighboring cells associated with one SMTC configuration have 5 neighboring cells, namely #a-e. The priority order is a > b > c >d > e (assuming that there is no case of equal priority). In such a case:

1) Based on the priority order, the UE only guarantees to measure the top N1 neighboring cells associated with the highest priority.

a) In a case where N1 = 1, the UE only measures the neighboring cell a and adjusts the SMTC offset based on the configuration information of the neighboring cell a.
b) In a case where N1 = 2, the UE determines the adjusted SMTC offset based on the configuration information of neighboring cells a and b. In a case where the SMTC offsets determined by neighboring cells a and b are the same, the SMTC only needs to be adjusted once.
c) In some embodiments, in a case where the remaining neighboring cells (such as e) have the same SMTC offset as the neighboring cell associated with the highest priority, the remaining neighboring cells may be measured. In a case where the remaining neighboring cells are different, they are not measured.
d) In some embodiments, in a case where the remaining neighboring cells (such as e) have the same SMTC offset as the neighboring cell associated with the highest priority and does not affect the measurement time, they may be measured at the same time. In a case where the remaining neighboring cells are different, they are not measured.

2) Based on the priority order, the UE only adjusts the SMTC offset N2 times. In some embodiments, in a case where the measurement requires 5 samples, the first 5 SMTC cycles may be measured based on offset 1; the next 5 samples may be measured based on offset 2; or offset 1 may be used for one SMTC cycle and offset 2 for the next SMTC cycle, and subsequently adjusted 5 times in sequence.

In a case where N2 = 2:

When the SMTC offsets associated with cells of different priorities are allowed to be the same (such as determining the priority according to the cell PCI or configuration order as described below), the SMTC offsets need to be merged. For example, in a case where the SMTC offsets determined by a and b are the same, they are merged into one SMTC adjustment. In this way, the neighboring cell c may be ranked. Similarly, in a case where the SMTC adjusted based on the high-priority neighboring cell includes other neighboring cells, these neighboring cells may be measured simultaneously.

In a case where the SMTC offsets associated with cells/cell groups of different priorities must be different (such as determining the priority based on the number of associated satellites/PCIs as described below), adjusting the SMTC offset N2 times refers to measuring the neighboring cells (groups) of the top N2 priorities.

3) Based on the priority order, adjusting the SMTC offset and perform measurements sequentially.

Embodiment 2: The SMTC offset are adjusted in order to satisfy the requirements of sequential measurements of a plurality of associated cells/satellites. The measurement priority may be determined based the PCI or the order of the configured neighboring cell list.

The priority order may be determined in the following manners:

1) Determining the priority of the neighboring cell based on the PCI: the larger/smaller the PCI, the higher the priority.

2) Performing a measurement based on the offset priority (for instance, a positive offset is measured first, and subsequently a negative offset is measured), wherein the positive offset refers to increasing the offset based on the current offset, and a negative offset refers to decreasing the offset based on the current offset.

For example, in a case where satellites 1/2/3 correspond to the PCI associated with the same SMTC, the actual SMTC offsets 1/2/3 calculated by the UE are +1 ms, +4 ms, and -3 ms respectively. In such a case, the UE adjusts the SMTC offsets to +4 ms, +1 ms, and -3 ms respectively for a measurement. In some embodiments, the UE may adjust and measure in order from positive to negative, or from large to small.

3) Determining the priority based on the configuration order of the neighboring cell list, such as the earlier the configuration, the higher the priority (subsequently, this rule is used as an example, and the later the configuration, the higher the priority). In some embodiments, the neighboring cell configuration list is:

a) the list of neighboring cells configured at the corresponding frequency point in a SIB 3 (intra-frequency) or a SIB 4 (inter-frequency). For example, the intra-frequency point configured in the SIB 3 contains the intra-frequency neighboring cell list IntraFreqNeighCellList. In a case where a total of 10 neighboring cells to be measured are configured according to the order of PCI#1 to 10 in the list, wherein odd-numbered PCIs are associated with SMTC#1 and even-numbered PCIs are associated with SMTC#2. In such a case, the SMTC position is modulated according to the order of the PCI of the cell associated with each SMTC in the neighboring cell configuration as the priority, i.e., the adjustment and measurement priority of SMTC#1 is: PCI#1 > #3 #5 > #7 > #9; and the adjustment and measurement priority of SMTC#2 is: PCI#2 > #4> #6 > #8 > #10.

b) the PCI-list in the SMTC. As mentioned in the background, each SMTC configuration in an SMTC 4 contains one set of PCI lists, and the priority of the cell may be determined directly based on the order of the list. However, according to the current signaling, the SMTC (the main SMTC containing information such as period, offset, length, and the like) does not contain a PCI-list. In such a case, the following method may be used:

i) Excluding the cells associated with the SMTC 4, and all neighboring cell lists configured in the same frequency point, the remaining cells are associated with the legacy SMTC by default. In such a case, the priority of the neighboring cells associated with the legacy SMTC refers to the neighboring cell list in the frequency point configuration. For example, in a case where 10 neighboring cells to be tested are configured in the order of PCI#1 to 10 on one frequency point, of which PCI#5 to 10 are associated with the SMTC 4 (the order may be modified), in this case, the remaining PCI#1-4 are associated with the legacy SMTC by default, and the priority is PCI#1 > #2 > #3 > #4.

ii) Modifying the configuration signaling to also configure a neighboring cell list for the legacy SMTC.

c) the neighboring cell list ntn-NeighCellConfigList configured in a SIB 19, containing neighboring cell information of all frequencies, which may be grouped according to the frequency configuration information and the associated SMTC, such as cell PCI#1 and #3 being on the same frequency and are associated with the same SMTC.

4) Calculating the SMTC offset associated with each respective neighboring cell, and grouping the SMTC offset based on the SMTC offset result, and subsequently determining the priority according to the number of satellites/neighboring cells in each group. In a case where one SMTC is associated with PCI#1 to 5 neighboring cells, the associated SMTC offset is calculated as [10 ms, 15 ms, 10 ms, 10 ms, 15 ms] based on ephemeris information of each cell. In this way, the offsets of PCI#1, 3, and 4 of the cells are the same and may be regarded as group a, and the offsets of PCI#2 and 5 are the same and may be regarded as another group b. The priority of the group with more cells is higher, therefore group a > group b.

5) Introducing network indication information to indicate the priority. In a case where the network configures the neighboring cell to be tested, the network will configure the associated priority. Optionally:

d) the priorities may be configured for different cells upon configuring the neighboring cell list in the SIB 3, the SIB 4, or the SIB 19.
e) the priorities of different cells may be configured in the PCI-list associated with the SMTC.

Embodiment 3: The UE measurement behavior or measurement time requirement only requires to measure the high-priority cell or satellite associated with the current SMTC, or to measure regardless all of the prolonged measurement time following associating to a cell or satellite.

Considering a scenario with a plurality of SMTCs and a plurality of satellites, NTN introduced a scaling factor $K_{multi\_SMTC}$ to amplify the measurement time. However, in a case where the SMTC offsets determined by the plurality of satellites associated with the SMTC are different, the current calculation method is not accurate. For example, in a case where the SMTC is associated with two LEO satellites, and the number of LEO satellites that the user (UE) may measure simultaneously is greater than or equal to 2. In such a case, $K_{multi\_SMTC} = 1$ indicates that the user may constantly measure two satellites simultaneously. However, in a case where the SMTC offsets associated with the two LEO satellites are different, the user may only be able to measure one of the satellites, and the measurement time remains unchanged; or the SMTC offsets are determined according to the two satellites and the associated satellites are subsequently measured, and the measurement time will increase. Therefore, the current measurement time needs to be modified or explained:

1) In a case where the SMTC offsets of a plurality of satellites are different, only one or a group of neighboring cells with the highest priority is measured. For example, in a case where the SMTC is associated with three LEO satellites, the user may measure two LEO satellites simultaneously. In such a case where the SMTC offsets of the three satellites are the same, $K_{multi\_}SMTC = 2$ (3 divided by 2 = 1.5, then rounded up). In a case where the SMTC offsets become different over time, for instance, 2 of the satellites have the same offset and a higher priority, and the other satellite has a different offset. In such a case, the user may only measure the group of satellites or cells with a high priority.

a) Upon determination of the measurement time, $K_{multi\_SMTC} = 2$ may still be used. The measurement time will be prolonged to some extent, and some satellites/cells cannot be measured. However, using $K_{multi\_SMTC} = 2$ ensures that the user may measure the high-priority group of satellites within the time window. For example, three satellites are associated with two different SMTC offsets. In a case where the user only measures the highest priority SMTC offset group, such as offset group 1, K is calculated by dividing the number of satellites in SMTC group 1 by the UE capability, which is smaller than the current 2. To reduce the impact of the protocol, the calculation of K may be kept unchanged in this disclosure, but the user does not need to measure all satellites.
b) Upon determination of the measurement time, $K_{multi\_SMTC} = 1$ is updated according to an actual number of satellites, i.e., a numerator $N_{LEO,i}$ needs to be modified to the number of satellites that may be measured based on the SMTC offset moved by the user, rather than the number of satellites to be measured by the SMTC. In this way, the measurement time is more accurate.

2) The measurement time is prolonged, and all satellites associated with the SMTC need to be measured.

a) A numerator $K_{multi\_SMTC}$ is a number of LEO satellites associated with the ith SMTC. In a case where the SMTC offsets of the associated satellites are different, the measurement time is allowed to be prolonged.
b) In a case where the SMTC offsets of the associated satellites are different, the measurement time needs to be prolonged. In the same context above, in a case where the SMTC is associated with three LEO satellites, the user may measure two LEO satellites simultaneously. In a case where the SMTC offsets calculated for two of the three satellites are always the same (in a case where the SMTC offsets of the two satellites are only the same occasionally, the SMTC offsets are considered different), and the offset of the other satellite is different. In such a case, it is necessary to measure the satellites in two groups:

i) Multiplying the current measurement time by the number of groups (2), the other parameters remain the same as the existing protocol.

iii) Multiplying the current measurement time by the number of groups (2), and adjusting $K_{multi\_SMTC}$ to a maximum number of satellites in each group. For example, in the context above, the number of satellites in the first group is 2 and the number of satellites in the second group is 1. The maximum value 2 is taken as the numerator for calculating $K_{multi\_SMTC}$.

iv) A total measurement time is equal to the sum of the measurement time for each group. Upon calculating the measurement time for each group, the number of satellites within the group is used as the numerator $K_{multi\_SMTC}$. For example, in the above example, the total measurement time is equal to T1+T2, $T1=K1_{multi\_SMTC}*T_{baseline}$ is the measurement time of the first group, wherein $K1_{multi\_SMTC}=2/2=1$; $T2=K_{multi\_SMTC}*T_{baseline}$ is the measurement time of the second group, wherein $K2_{multi\_SMTC}=1/2=1$.

Hereinafter are the apparatus embodiments of the present disclosure, which may be used to practice the method embodiments of the present disclosure. For details not disclosed in the apparatus embodiments of the present disclosure, reference may be made to the method embodiments of the present disclosure.

FIG. 9 is a schematic block diagram of an apparatus 900 for cell measurement according to some embodiments of the present disclosure. The apparatus is used in a terminal and has a function of implementing the steps performed by the terminal in the method for cell measurement. As illustrated in FIG. 9, the apparatus 900 may include:
a measuring module 901, configured to perform cell measurement on at least two satellite cells associated with a same SMTC based on the measurement priorities of the at least two satellite cells.

In some embodiments, the measuring module 901 is configured to:

determine at least one SMTC offset; wherein each SMTC offset in the at least one SMTC offset is associated with at least one of the at least one satellite cells;

sequentially measure the satellite cells respectively associated with the at least one SMTC offset based on the at least one SMTC offset and based on the measurement priorities of the satellite cells.

In some embodiments, the measuring module 901 is configured to determine the SMTC offset of each of the top N1 satellite cells arranged in a descending order of measurement priorities of the at least two satellite cells as the at least one SMTC offset.

In some embodiments, in a case where the SMTC offsets of a first satellite cell and a second satellite cell of the at least two satellite cells are the same, wherein the first satellite cell belongs to the top N1 satellite cells, and the second satellite cell does not belong to the top N1 satellite cells,
the measuring module 901 is further configured to, during a process of performing cell measurement based on the SMTC offset of the first satellite cell, measure the second satellite cell while preferentially measuring the first satellite cell.

In some embodiments, the measuring module 901 is configured to, in a case where cell measurement of the second satellite cell does not impact a time used for cell measurement, measure the second satellite cell while preferentially measuring the first satellite cell during cell measurement based on the SMTC offset of the first satellite cell.

In some embodiments, N1 satisfies at least one of the following conditions:

N1 is determined by a capability of the terminal;
N1 is determined by a network configuration;
N1 is determined separately for each frequency point; or
N1 is shared by a plurality of frequencies.

In some embodiments, the measuring module 901 is configured to determine top N2 SMTC offsets of the respective SMTC offsets of the at least two satellite cells arranged in a descending order of the measurement priorities of the corresponding satellite cells, as the at least one SMTC offset.

In some embodiments, the measuring module 901 is configured to measure, for each SMTC offset of the at least one SMTC offset, a maximum of N3 satellite cells of the satellite cells associated with the SMTC offset;
wherein a value of N3 is determined by the upper limit of the number of cells measured simultaneously by the terminal and the time used for cell measurement within one SMTC period.

In some embodiments, N2 satisfies at least one of the following conditions:

N2 is determined by a capability of the terminal;
N2 is determined by a network configuration;
N2 is determined separately for each frequency point; or
N2 is shared by a plurality of frequencies.

In some embodiments, the time used for cell measurement is determined by a time scaling factor,

the time scaling factor is determined based on a number of satellite cells in the at least two satellite cells and a number of satellite cells that the terminal is capable of measuring simultaneously; or
the time scaling factor is determined based on a sum of the number of satellite cells associated with each of the at least one SMTC offsets and a number of satellite cells that the terminal is capable of measuring simultaneously.

In some embodiments, the measuring module 901 is configured to determine the SMTC offset of each of the at least two satellite cells as the at least one SMTC offset.

In some embodiments, the time used for cell measurement includes:

a product of the basic measurement time and a number of measurement groups; or
a product of the basic measurement time, a number of measurement groups, and a first scaling factor, wherein the first scaling factor is a maximum value of the scaling factors associated with the at least one SMTC offset, wherein the scaling factor associated with the SMTC offset is determined by the number of satellite cells associated with the SMTC offset and the number of satellite cells allowed to be measured simultaneously by the terminal; or
a sum of the times used for cell measurement respectively associated with the at least one SMTC offset, wherein the measurement time associated with the SMTC offset is a product of a basic measurement time and a scaling factor associated with the SMTC offset.

In some embodiments, the measurement priorities of the at least two satellite cells are determined by at least one of:

a descending order of respective physical cell identifier (PCI) numbers of the at least two satellite cells;
an ascending order of respective PCIs of the at least two satellite cells;
a descending order of respective SMTC offsets of the at least two satellite cells;
an ascending order of respective SMTC offsets of the at least two satellite cells;
a configuration order of the at least two satellite cells in a neighboring cell list;
a descending order of a number of cells in a cell group to which the satellite cell belongs, wherein the cell group is acquired by organizing the at least two satellite cells based on their respective SMTC offsets;
an ascending order of a number of cells in a cell group to the satellite cell belongs; or
priorities of the at least two cells configured by a network.

In some embodiments, the neighboring cell list includes:

a neighboring cell list configured on an associated frequency point in a SIB 3; or
a neighboring cell list configured on an associated frequency point in a SIB 4; or
a PCI list in an SMTC; or
a neighboring cell list configured in a SIB 19.

In some embodiments, network-configured priorities of the at least two satellite cells comprise include:

priorities configured for the at least two satellite cells in a SIB 3; or
priorities configured for the at least two satellite cells in a SIB 4; or
priorities of the at least two satellite cells configured in a SIB 19; or
priorities of the at least two satellite cells configured in a PCI list in an SMTC .

It should be noted that the apparatus according to the embodiments is only described by way of example in terms of the division of functional modules when implementing its functions. In practice, the functions may be allocated to be completed by different functional modules as needed. That is, the internal structure of the device may be divided into different function modules to complete part or all of the functions described above.

Regarding the apparatus in the above embodiments, the specific manner in which each module performs operations has been described in detail in the method embodiments and is not elaborated herein.

FIG. 10 is a schematic structural diagram of a computer device 1000 according to some embodiments of the present disclosure. The computer device 1000 may include: a processor 1001, a transceiver 1002, and a memory 1003.

The processor 1001 includes one or more processing cores. The processor 1001 performs various functional applications and information processing by running software programs and modules.

The transceiver 1002 may include a receiver and a transmitter. For example, the receiver and the transmitter may be implemented as a same wireless communication component, and the wireless communication component may include a wireless communication chip and a radio frequency antenna.

The memory 1003 may be communicably connected to the processor 1001 and the transceiver 1002.

The memory 1003 may be configured to store one or more computer programs, and the processor 1001 is configured to load and run the one or more computer programs to perform each process performed by the terminal in the above method embodiments.

Additionally, the memory 1003 may be implemented by any type of transitory or non-transitory storage device or a combination thereof, and the transitory or non-transitory storage device includes but is not limited to: a random-access memory (RAM), a read-only memory (ROM), an erasable programmable read-only memory (EPROM), an electrically erasable programmable read-only memory (EEPROM), a flash memory or other solid-state storage devices, a compact disc read-only memory (CD-ROM), a high-density digital video disc (DVD) or other optical storage devices, a tape cassette, a magnetic tape, a disk storage or other magnetic storage devices.

In an exemplary embodiment, in a case where the computer device 1000 is implemented as the terminal, the processor 1001 is configured to perform cell measurement for at least two satellite cells associated with the same SMTC based on the measurement priorities of the at least two satellite cells.

In a case where the computer device 1000 is implemented as the terminal, the process executed by the processor 1001 may refer to the steps performed by the terminal in the methods described from FIG. 4 to FIG. 8.

Some embodiments of the present disclosure further provide a computer-readable storage medium storing one or more computer programs therein. The one or more computer programs, when loaded and run by a processor, implements the steps performed by the terminal or a network device in the method described from FIG. 4 to FIG. 8.

Some embodiments of the present disclosure further provide a computer program product. The computer program product includes one or more computer instructions, wherein the one or more computer instructions are stored in the computer-readable storage medium. The one or more computer instructions, when loaded and execute by a processor in a computer device, causes the computer device to implement the steps performed by the terminal or the network device in the method described from FIG. 4 to FIG. 8.

Some embodiments of the present disclosure further provide a chip. The chip includes programmable electric circuitry and/or one or more program instructions, wherein the chip, when running on the computer device, causes the computer device to implement the steps in the method described from FIG. 4 to FIG. 8.

Some embodiments of the present disclosure further provide a computer program. The computer program is executed by a processor in a computer device to implement the steps in the method described from FIG. 4 to FIG. 8.

Those skilled in the art should understand that in one or more of the above embodiments, the functions described in the embodiments of the present disclosure may be implemented in hardware, software, firmware, or any combination thereof. The functions, when implemented in software, may be stored in a computer-readable medium or transmitted as one or more instructions or codes on a computer-readable medium. The computer-readable medium includes a computer storage medium and a communication medium, where the communication medium includes any medium that facilitates the transfer of a computer program from one place to another. The storage medium is any available medium that is accessible by a general-purpose or special-purpose computer.

Described above are merely exemplary embodiments of the present disclosure and are not intended to limit the present disclosure. Any modifications, equivalent substitutions, improvements and the like, made within the spirit and principle of the present disclosure should fall within the protection scope of the present disclosure.

**Claims**

**1.** A method for cell measurement, performed by a terminal, the method comprising:
performing cell measurement for at least two satellite cells associated with a same synchronization signal/physical broadcast channel (PBCH) block (SSB) measurement time configuration (SMTC) based on measurement priorities of the at least two satellite cells.

**2.** The method according to claim 1, wherein performing the cell measurement based on the measurement priorities of the at least two satellite cells comprises:

determining at least one SMTC offset, wherein each of the at least one SMTC offset is associated with at least one of the at least two satellite cells;

performing, in sequence based on the measurement priorities of the satellite cells associated with the at least one SMTC offsets, cell measurement for the satellite cells based on the at least one SMTC offset.

3. The method according to claim 2, wherein determining the at least one SMTC offset comprises:

determining an SMTC offset of each of top N1 satellite cells from the at least two satellite cells arranged in a descending order of measurement priorities as the at least one SMTC offset.

4. The method according to claim 3, wherein an SMTC offset of a first satellite cell and an SMTC offset of a second satellite cell in the at least two satellite cells are the same; and in a case where the first satellite cell belongs to the top N1 satellite cells but the second satellite cell does not belong to the top N1 satellite cells, the method further comprises:

performing, during cell measurement based on the SMTC offset of the first satellite cell, cell measurement for the second satellite cell while preferentially measuring the first satellite cell.

5. The method according to claim 4, wherein performing, during the cell measurement based on the SMTC offset of the first satellite cell, the cell measurement for the second satellite cell in the case where the measurement is preferentially performed for the first satellite cell comprises

performing, in a case where the cell measurement for the second satellite cell does not impact a time used for the cell measurement during the cell measurement based on the SMTC offset of the first satellite cell, the cell measurement for the second satellite cell while preferentially measuring the first satellite cell.

6. The method according to any one of claims 3 to 5, N1 satisfies at least one of the following conditions:

N1 is determined by a capability of the terminal;
N1 is determined by a network configuration;
N1 is separately determined regarding each frequency point; or
N1 is shared by several frequencies.

7. The method according to claim 2, wherein determining the at least one SMTC offset comprises:

determining top N2 SMTC offsets from the SMTC offsets of the at least two satellite cells arranged in a descending order of the measurement priorities associated with the satellite cells as the at least one SMTC offset.

8. The method according to claim 7, wherein performing, in sequence based on the measurement priorities of the satellite cells associated with the at least one SMTC offsets, the cell measurement for the satellite cells based on the at least one SMTC offset comprises:

performing cell measurement for at most N3 satellite cells in the satellite cells associated with each SMTC offset of the at least one SMTC offset;
wherein a value of N3 is determined by an upper limit of a number of cells simultaneously measured by the terminal and a duration for cell measurement within one SMTC period.

9. The method according to claim 7 or claim 8, wherein N2 satisfies at least one of the following conditions:

N2 is determined by a capability of the terminal;
N2 is determined by a network configuration;
N2 is separately determined regarding each frequency point; or
N2 is shared by a plurality of frequencies.

10. The method according to any one of claims 3 to 9, wherein a duration for cell measurement is determined by a time scaling factor;
wherein the time scaling factor is determined based on a sum of number of satellite cells respectively associated with at least one SMTC offset and a number of satellite cells allowed to be simultaneously measured by the terminal.

11. The method according to claim 2, wherein determining the at least one SMTC offset comprises:
determining respective SMTC offsets of the at least two satellite cells as the at least one SMTC offset.

12. The method according to claim 11, wherein a time used for cell measurement comprises:

a product of a basic measurement time and a number of measurement groups; or

a product of a basic measurement time, a number of measurement groups, and a first scaling factor, wherein the first scaling factor is a maximum value of scaling factors respectively associated with the at least one SMTC offset, wherein the scaling factor associated with the SMTC offset is determined by a number of satellite cells associated with the SMTC offset and a number of satellite cells allowed to be simultaneously measured by the terminal; or

a sum of measurement times respectively associated with the at least one SMTC offset, wherein the measurement time associated with the SMTC offset is a product of a basic measurement duration and a scaling factor associated with the SMTC offset.

13. The method according to any one of claims 1 to 12, wherein the measurement priorities of the at least two satellite cells are determined based on at least one of:

a descending order of respective physical cell identifiers (PCI) of the at least two satellite cells;
an ascending order of respective PCIs of the at least two satellite cells;
a descending order of respective SMTC offsets of the at least two satellite cells;
an ascending order of respective SMTC offsets of the at least two satellite cells;
a configuration order of the at least two satellite cells in a neighboring cell list;
a descending order of a number of cells in a cell group to which each of the at least two satellite cells belongs, wherein the cell group is acquired by organizing the at least two satellite cells based on their respective SMTC offsets;
an ascending order of a number of cells in a cell group to which each of the at least two the satellite cell belongs; or
priorities of the at least two cells configured by a network.

14. The method according to claim 13, wherein the neighboring cell list comprises:

a neighboring cell list configured on an associated frequency point in a SIB 3; or
a neighboring cell list configured on an associated frequency point in a SIB 4; or
a PCI list in an SMTC; or
a neighboring cell list configured in a SIB 19.

15. The method according to claim 13 or 14, wherein network-configured priorities of the at least two satellite cells comprise:

priorities configured for the at least two satellite cells in a SIB 3; or
priorities configured for the at least two satellite cells in a SIB 4; or
priorities configured for the at least two satellite cells in a SIB 19; or
priorities configured for the at least two satellite cells in a PCI list in an SMTC.

16. An apparatus for cell measurement, comprising:
a measuring module, configured to perform cell measurement for at least two satellite cells associated with a same synchronization signal/physical broadcast channel (PBCH) block (SSB) measurement time configuration (SMTC) based on measurement priorities of the at least two satellite cells.

17. A computer device, comprising: a processor, a memory, and a transceiver;
wherein the memory stores one or more computer programs, wherein the processor, when loading and running the one or more computer programs, is caused to perform the method for cell measurement as defined any one of the claims 1 to 15.

18. A computer-readable storage medium storing one or more computer programs, wherein a processor executes the one or more computer programs to perform the method for cell measurement as defined in any one of the claims 1 to 15.

19. A chip, comprising: programmable electric logic circuitry and/or one or more programs, wherein the chip, when running on a computer device, is configured to cause the computer device to perform the method for cell measurement as defined in any of the claims 1 to 15.

20. A computer program, wherein the computer program, when called and run by a processor, causes the processor to perform the method for cell measurement as defined in any of the claims 1 to 15.

FIG. 1

FIG. 2

Satellite 1

Satellite 2

Movement

Movement

SMTC period

SMTC1

SMTC1 offset

Time instant T1

Satellite 1

Satellite 2

SMTC period

SMTC1

SMTC1 offset

Time instant T2

FIG. 3

401

Performing cell measurement for at least two satellite cells associated with a same synchronization signal/physical broadcast channel (PBCH) block (SSB) measurement time configuration (SMTC) based on measurement priorities of the at least two satellite cells.

FIG. 4

501

Determining at least one SMTC offset for at least two satellite cells associated with a same SMTC; wherein each of the at least one SMTC offset is associated with at least one of the at least two satellite cells.

502

Performing, in sequence based on measurement priorities of the satellite cells associated with the at least one SMTC offset, cell measurement for the satellite cells based on the at least one SMTC offset.

FIG.5

Determining an SMTC offset of each of top N1 satellite cells from the at least two satellite cells arranged in a descending order of measurement priorities as the at least one SMTC offset. **501a**

Performing, in sequence based on the measurement priorities of the satellite cells associated with the at least one SMTC offset, cell measurement for the satellite cells based on the at least one SMTC offset. **502**

FIG. 6

Determining top N2 SMTC offsets from the SMTC offsets of the at least two satellite cells arranged in a descending order of the measurement priorities associated with the satellite cells as the at least one SMTC offset. **501b**

Performing, in sequence based on the measurement priorities of the satellite cells associated with the at least one SMTC offset, the cell measurement for the satellite cells based on the at least one SMTC offset. **502**

FIG. 7

Determining respective SMTC offsets of the at least satellite cells as the at least one SMTC offset. **501c**

Performing, in sequence based on the measurement priorities of the satellite cells associated with the at least one SMTC offset, the cell measurement for the satellite cells based on the at least one SMTC offset. **502**

FIG. 8

Apparatus for cell measurement 900

Measuring module **901**

FIG. 9

Computing device 1000

Processor 1001

Transceiver 1002

Wireless communication chip

Radio antenna

Wireless communication component

Memory 1003

FIG. 10

## INTERNATIONAL SEARCH REPORT

| International application No. |
| --- |
| **PCT/CN2023/106425** |

### A. CLASSIFICATION OF SUBJECT MATTER

H04W 24/02(2009.01)i

According to International Patent Classification (IPC) or to both national classification and IPC

### B. FIELDS SEARCHED

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT, ENTXTC, WPABSC, DWPI, 3GPP: 同步信号块, 测量时间配置, 测量定时配置, 卫星, 非地面, 小区, 测量, 同一, 相同, 同样, 优先级, 优先权, 偏移, Synchronization Signal/Physical Broadcast Channel Block, SSB, Measurement Timing Configuration, SMTC, SSB-MTC, satellite, Non Terrestrial Network, NTN, cell, PCI, measurement, same, priority, offset, shift

### C. DOCUMENTS CONSIDERED TO BE RELEVANT

| Category* | Citation of document, with indication, where appropriate, of the relevant passages | Relevant to claim No. |
| --- | --- | --- |
| Y | WO 2022157731 A1 (TELEFONAKTIEBOLAGET LM ERICSSON (PUBL)) 28 July 2022 (2022-07-28) <br> description, page 13, line 24-page 56, line 27, and figure 4 | 1-21 |
| Y | WO 2022183407 A1 (GUANGDONG OPPO MOBILE TELECOMMUNICATIONS CORP., LTD.) 09 September 2022 (2022-09-09) <br> description, page 3, line 7-page 16, line 4 | 1-21 |
| A | CN 116017540 A (ZEKU TECHNOLOGY (BEIJING) CORP., LTD.) 25 April 2023 (2023-04-25) <br> entire document | 1-21 |
| A | CATT. "Discussion on Measurement Requirements for NTN" <br> *3GPP TSG-RAN WG4 Meeting #98-Bis-E. R4-2104766*, 20 April 2021 (2021-04-20), <br> entire document | 1-21 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **03 December 2023** | **11 December 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/106425**

| Patent document cited in search report | | | Publication date (day/month/year) | Patent family member(s) | | | Publication date (day/month/year) |
|---|---|---|---|---|---|---|---|
| WO | 2022157731 | A1 | 28 July 2022 | CA | 3206338 | A1 | 28 July 2022 |
| | | | | EP | 4282086 | A1 | 29 November 2023 |
| WO | 2022183407 | A1 | 09 September 2022 | CN | 116458246 | A | 18 July 2023 |
| CN | 116017540 | A | 25 April 2023 | | None | | |

Form PCT/ISA/210 (patent family annex) (July 2022)